# EUROPEAN PATENT APPLICATION

(11) **EP 2 202 493 A1**
(43) Date of publication of application: **30.06.2010**
(21) Application number: 08172735.6
(22) Date of filing: 23.12.2008
(51) Int. Cl.: G01F 1/66

(54) **Flow meter housing with concentric joints**

(71) Applicant: KAMSTRUP A/S, 8660 Skanderborg (DK)
(72) Inventor: Borring, Peter Nordlund, 7100 Vejle (DK)
(74) Representative: Plougmann & Vingtoft A/S

(57) **Abstract**

An ultrasound flow meter housing including a first housing part with a first channel for fluid flow, and a first through-going opening to the first channel. A second housing part has a second channel for fluid flow, and a second through-going opening to the second channel. The first and second through-going openings are arranged for mounting of respective first and second ultrasound transducers. A measurement channel includes at least parts of the first and second channels, and the first and second housing parts are interconnected by at least one watertight passage, e.g. such as at least one gastight passage. This watertight passage can be formed by welding, soldering or gluing. Especially, the first and second housing parts may be concentric monolithic metal parts formed by a turning process, and the at least one watertight passages are concentric welding seams. The first and second housing parts can be directly interconnected by a single watertight passage, or they may be interconnected via one or more intermediate channel forming elements using two or more watertight passages. Flange parts for forming inlet and outlet of the flow meter may be monolithically formed with the housing parts, or interconnected with the housing parts via a channel forming element using one or more watertight passages. Especially embodiments with concentric housing parts are suitable for low cost manufacturing, e.g. automatic welding robots may be used, and still the flow meter housings can be suited for high pressure applications.

## Description

### Field of the invention

The invention relates to the field of flow meters, more specifically the field of flow meters for use in a consumption meter, such as heat meter, a cooling meter, a water meter, or a gas meter. More specifically the invention relates to the field of ultrasound flow meters, such as ultrasound flow meters suited for implementation in large diameter versions. The invention provides an ultrasound flow meter, a method of manufacturing an ultrasound flow meter, and a consumption meter.

### Background of the invention

Normally, large flow meters suited for measuring a fluid flow in connection with charging of a consumed quantity (e.g. heat, cooling, water or gas) will have a tubular metal housing with a cavity in the form of a through-going hole for receiving a fluid flow to be measured. Flanges for connection to other fluid flow elements are present in each of the housing ends.

In an ultrasonic flow meter, a number of ultrasound transducers are mounted in the housing by mounting studs, placed on opposite sides of the tubular housing element at each of its ends, thus allowing ultrasonic measurements to be performed on the fluid flowing through measurement lines between the ultrasonic transducers; the measurement lines forming an angle relative to the flow direction.

In some cases, temperature sensors are also mounted in the housing, such that the temperature sensor can come into contact with the fluid inside the housing.

Further, the metal housing normally includes outside elements for attachment of the housing to a calculator and/or control unit with electronic components connected to the ultrasonic transducers and temperature sensor. A crane lifting device can be present on very large models.

The flow meter housing, the flanges, the mounting studs and if present the lifting device is in most cases made of the same metallic material, the assembly method being welding.

The mounting studs for the ultrasound transducers are usually mounted by perforating the tubular housing element e.g. by drilling or laser cutting and attaching the mounting studs by welding. The mounting studs are made for easy mounting and adjustment of the ultrasonic transducers with respect to sealing against the flowing media, its outside shape being defined by the drilled or laser cut perforation of the flow meter tubular element.

The positioning of the mounting studs is critical since defining the measurement lines. Several parameters are influencing the tolerances, but in particular the welding process is requiring attention, since often being a manually conducted. This obviously calls for personal operator skills, but further is the often curved geometry of the mounting studs of such form that proper positioning can be hard. The welding seam is also of curved shape, hence of complicated character.

As the mounting studs are placed on opposite sides of the flow meter housing, the housing should be lifted and repositioned during the process of welding of the mounting studs. Since the weight of the housing is significant, this handling is time consuming hence adding production cost to the overall flow meter.

### Summary of the invention

Thus, according to the above explanation, it is an object of the present invention to provide a flow meter and a method of manufacturing a flow meter suited for low cost production without the need for hand-crafted welded mounting studs for mounting of ultrasound transducers. The meter and its method of manufacturing should preferably be material efficient, and at the same time it should allow easy adaption to the manufacturing of different sizes and shapes of the housing. Further, the meter and its manufacturing method should preferably allow easy processing and control, thus allowing easy control of overall assembly quality at a low production cost.

According to a first aspect, the invention provides an ultrasound flow meter for ultrasonic measurement of fluid flow, the ultrasound flow meter including
- a first housing part with a first channel arranged for fluid flow, the first housing part including a first through-going opening to the first channel, the first through-going opening being arranged for mounting of a first ultrasound transducer, and
- a second housing part with a second channel arranged for fluid flow, the second housing part including a second through-going opening to the second channel, the second through-going opening being arranged for mounting of a second ultrasound transducer,
wherein a measurement channel includes at least a part of the first channel and a part of the second channel, and wherein the first and second housing parts are interconnected by at least one watertight passage, such as at least one gastight passage.

Such ultrasound flow meter is suited for manufacturing in large dimension versions without the need for hand-crafted welding studs, since the flow meter is suitable for manufacturing in rather simple manufacturing steps, as will be further described in connection with preferred embodiments. Mounting of ultrasonic transducer sets and temperature sensors can be formed without the disadvantages of using welded mounting studs, since the openings for the mounting of the ultrasound transducers can be formed by simple drilling in the first and second housing parts. The first and second housing parts can be formed as respective monolithic parts from rigid metal bodies shaped in a simple turning process. This process is rather simple, and in case the housing parts are interconnected using concentric watertight passages, e.g. formed by welding, the assembled flow meter housing will not suffer from undesired material stresses resulting from the forming of mounting studs. Further, if the ultrasonic transducers are mounted in each housing body part from the side of the channel arranged for fluid flow during operation of the ultrasonic flow meter and before the assembly of the two housing body parts, the assembly of the ultrasonic transducers can be made self sealing due to the pressure from the fluid flow.

Large forces from flow pressure can be present in large ultrasonic flow meters, and as such both the housing parts as well as the assemblies of the housing parts can be subjected to high loads. Particular the assemblies are critical, since most often being performed by welding, and when using mounting studs the welding seam geometry further complicates the overall assembly quality. According to the invention, the flow meter housing can be formed by concentric assemblies, which are well defined thus reducing the fault possibility during manufacturing. The material thickness of the tubular housing element may even be reduced compared to the conventional manufacturing process using mounting studs. Further, the well defined concentric shape of the assemblies makes an automated assembly process, such as robot assisted welding, easily adaptable.

Compared to the conventional production method of flow meter housings, the method according to the invention allows easy altering of housing shape e.g. to fit another type of ultrasonic transducer or temperature sensor. The flow meter housing parts may include rib to the housing part serving for attachment of an electronic unit to the flow meter housing, or such as to provide attachment means for further items.

In some embodiments, end parts of the first and second housing parts are directly connected by means of a single watertight passage. Such embodiments can be manufactured with very few and simple process steps, and they are thus suited for low cost mass production.

In other embodiments, the first and second housing parts are interconnected via a channel forming element, such as a piece of pipe, with a first end connected to an end part of the first housing part and a second end connected to an end part of the second housing part by means of respective first and second watertight passages. With such channel forming element, in simple versions a piece of pipe, the flow meter is suited for manufacturing in application specific lengths, since the intermediate channel forming elements can be chosen to have a length to fit a desired length. Thus, the flow meter is easily adaptable with respect to a total length of the flow meter and/or with respect to a measurement channel length, since the same flow meter housings, as will also be further described below.

In preferred embodiments, the first and second housing parts include respective end parts with a substantially circular shape arranged for performing a watertight passage to another element. Hereby the one or more watertight passages can be formed by soldering, welding or gluing in a simple process due to the simple circular shape.

The ultrasound flow meter may include first and second flanges arranged for connection to a channel for fluid flow, thus allowing the flow meter to be mounted to corresponding flanges on the pipe system where the meter is inserted. The first and second flanges may be monolithically integrated with the respective first and second housing parts. Alternatively, the flanges are interconnected with the first and second housing parts via watertight passages, e.g. via intermediate interconnecting channel forming elements.

Preferably, the first and second housing parts are formed by respective monolithic metal parts. This allows a simple manufacturing process for the housing parts using a turning process, e.g. to provide concentric monolithic first and second housing parts. Especially, the first housing part may be connected to a first flange by means of one or more watertight passages. Likewise, the second housing part may be connected to the second flange by means of one or more watertight passages. In another embodiment, the first housing part is interconnected to the first flange via a channel forming element, such as a piece of pipe, with a first end connected to an end part of the first housing part and a second end connected to an end part of the first flange by means of a watertight passage, and likewise the second housing part may be interconnected to the second flange via a channel forming element, such as a piece of pipe, with a first end connected to an end part of the second housing part and a second end connected to an end part of the second flange by means of a watertight passage. Embodiments without intermediate channel forming elements are simple to manufacture, while the intermediate channel forming elements allow flexibility with respect to the fitting of the flow meter to a desired length. Thus, parts of the flow meter can be premanufactured in large scale production and then later fitted a desired length using channel forming elements with length suited according to the desired length.

The first housing part may include a plurality of through-going openings to the first channel, said plurality of through-going openings being arranged for mounting of respective ultrasound transducers, and wherein the second housing part includes a corresponding plurality of through-going openings to the second channel, said plurality of through-going openings being arranged for mounting of respective ultrasound transducers. Especially, the plurality of through-going openings in the first and second housing parts may be directed so as to form a plurality of measurement paths between respective ultrasound transducers mounted in through-going openings in the first housing part and ultrasound transducers mounted in through-going openings in the second housing part. Such embodiments are suited for large dimension flow meters where several sets of ultrasonic measurement paths are used in order to obtain a desired measurement precision by effectively covering the entire measurement channel cross section. Such embodiments may include a measurement unit arranged for electrical connection to ultrasound transducers mounted in the plurality of through-going openings in the first and second housing parts, the measurement unit being arranged to perform ultrasonic measurements utilizing the plurality of measurement paths and to generate first data representing a first flow rate based thereon, thereby using the plurality of measurement paths to obtain a precise flow measurement result. Alternatively or additionally, the measurement unit may be arranged to generate the first data representing the first flow rate based on a first set of measurement paths, and to generate second data representing a second flow rate based on a second set of measurement paths, such as the first and second sets being disjoint sets. Such embodiment utilizes the plurality of measurement paths to result in two measurement results, i.e. the flow meter functions as two separate flow meters, and their measurement results can e.g. be compared in order to monitor the meter for correct function: if the two results are significantly different, then at least one of the meters can be assumed to be malfunctioning.

In preferred embodiments, the first and second housing parts have shapes which are substantially rotation symmetrical around an axis through a central part of the flow meter. Thus, such embodiments the first and second housing parts are formed by a turning process resulting in monolithic concentric first and second housing parts.

The at least one watertight or even gastight passage is preferably provided by a welded passage, especially a welded passage with a through-going welding so as to allow high pressure application of the flow meter. However, the watertight or gastight passage may alternatively be formed by soldering or by gluing the relevant parts together. Common to all methods of providing the watertight passage(s) is that these watertight passage(s) preferably have a circular shape, i.e. extend purely or at least substantially in a direction perpendicular to a central axis through the flow meter.

In preferred embodiments, the first and second housing parts are formed by metal, such as stainless steel or brass or the like, but the first and second housing parts may alternatively be formed by a polymeric material, by a ceramics, or by a composite material.

In a second aspect, the invention provides a consumption meter including an ultrasound flow meter according to the first aspect. The consumption meter may especially be a heating meter, a cooling meter, a water meter, or a gas meter.

In a third aspect, the invention provides a method of manufacturing an ultrasound flow meter including
- forming a first housing part including a first channel and a first through-going opening to the first channel, the first through-going opening being arranged for mounting of a first ultrasound transducer,
- forming a second housing part including a second channel and a second through-going opening to the second channel, and
- performing an interconnecting process, such as soldering or welding or gluing, so as to form at least one watertight passage for interconnecting the first and second housing parts, thereby forming a measurement channel including at least parts of the first and second channels.

Especially, the forming of the first and second housing parts may include performing a process on a metal body, such as a turning process, so as to form first and second substantially concentric housing parts. Especially, the interconnecting process may include forming a through-going welding seam which is substantially perpendicular to an axis of rotational symmetry.

The method may include directly interconnecting end parts of the first and second housing parts by a single watertight passage, such as using a welding process.

Alternatively, the method includes interconnecting the first housing part with a first end of a channel forming element by performing a first interconnecting process, such as soldering, welding or gluing, to form a first watertight passage, and interconnecting the second housing part with a second end of the channel forming element by performing a second interconnecting process, such as soldering, welding or gluing, to provide a second watertight passage.

A specific method of manufacturing includes the following:
- performing a turning process to provide a concentric first housing part including a predefined shape formed by the turning process,
- forming, such as drilling, a first hole in the concentric first housing part to provide a channel arranged for fluid flow during operation of the ultrasonic flow meter, and
- forming, such as drilling, a number of second holes in the predefined shape of the concentric first housing part to provide openings to the cavity suited for encircling the fluid flow.
The method may further include:
- performing a turning process to provide a concentric first flange part including a predefined shape formed by the turning process,
- forming, such as drilling, a first hole in the first flange part to provide a channel arranged for fluid flow during operation of the ultrasonic flow meter,
- forming, such as drilling, a number of second holes in the first flange part to provide a standardised bolt hole pattern,
- performing an assembly process, such as soldering or welding or gluing, of the concentric first housing part and the first flange part.
Finally, the method may include installing an ultra sound transducer into the first housing part through the channel arranged for fluid flow during operation of the ultrasonic flow meter, and
- performing an assembly process, such as soldering or welding or gluing, of a first housing part and a corresponding second housing part to form a flow meter housing.

In preferred methods, the flange part is attached to the housing part before the assembly of the first and second housing parts, however it is to be understood that the order of assembling the flange part to the housing body part and the assembling of the two housing body parts can be chosen arbitrarily or even be carried out simultaneously.

It is appreciated that any advantage mentioned for the first aspect applies as well for the second and third aspects. Further, any sub aspect mentioned in connection with the first aspect may in any way be combined with the second and third aspects.

### Brief description of drawings

In the following, the invention will be described in more details by referring to embodiments illustrated in the accompanying drawings, of which
Fig. 1 illustrates an embodiment with directly interconnected first and second housing parts,
Fig. 2 illustrates a section cut of the embodiment of Fig. 1,
Fig. 3 illustrates an embodiment with first and second housing parts interconnected by an intermediate channel forming element, and
Fig. 4 illustrates a section cut of the embodiment of Fig. 3.

### Detailed description of the invention

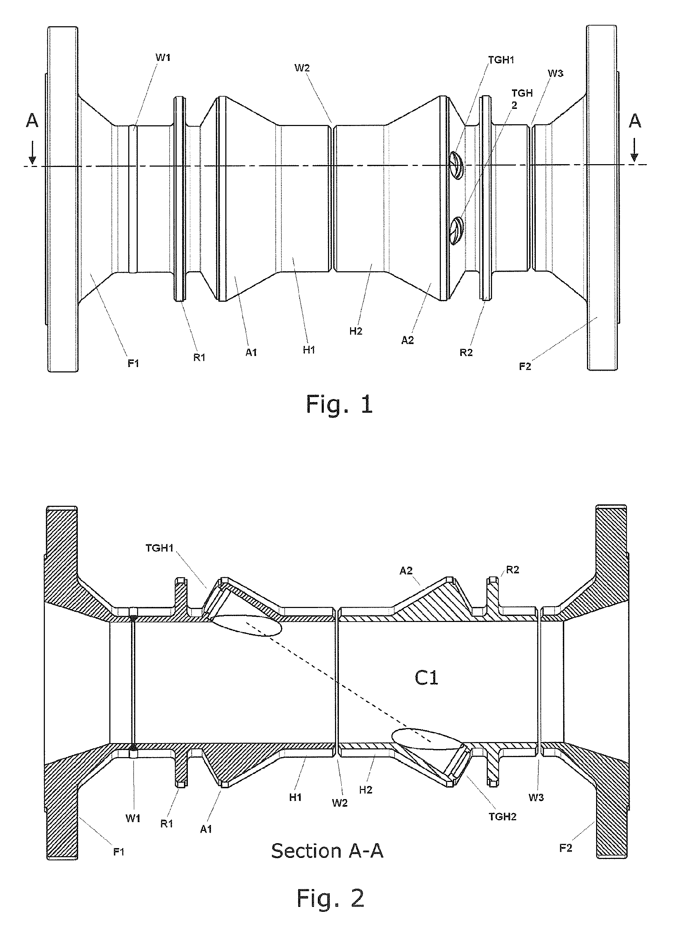

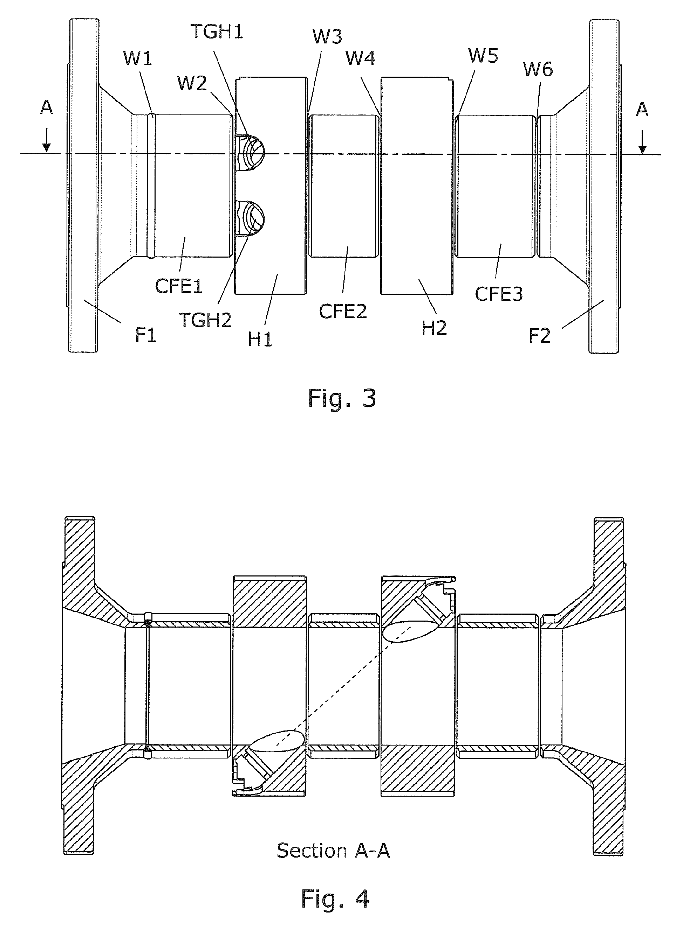

In the following, Figs. 1 and 2 illustrate different views of one concentric flow meter embodiment, while Figs. 3 and 4 illustrate different views of another concentric flow meter embodiment.

Fig. 1 is a side view of an ultrasound flow meter housing characterised by a first housing part H1 and a first flange part F1 being interconnected with the first housing part H1 via a watertight passage W1. A second housing part H2 and a second flange part F2 are interconnected via watertight passage W3. The two housing parts H1 and H2 are interconnected by watertight passage W2. The watertight passages W1, W2, W3 are formed preferably by welding, and as seen, these watertight passages are concentric and formed on housing parts H1, H2 and flange parts F1, F2 which are also concentric, e.g. formed by turning processes. This makes the assembly process, e.g. by welding, very manufacturing friendly both in terms of quality and processing. Automation can easily be introduced during manufacturing of the flow meter housing, decreasing the overall production cost. Further, the process can easily be adapted to different lengths and cross section sizes of the housing.

On the second housing part H2, the through-going holes TGH1, TGH2 placed in an angled part and suited for mounting of respective ultrasound transducers for providing separate measuring paths to matching transducers to be placed in corresponding through-going holes the first housing part H1, not visible. The through-going TGH1, TGH2 holes can be arranged in a defined angle relative to the axis of rotation of the flow meter housing, or following a linear path relative a section cut of the flow meter housing.

Ribs R1, R2 on either housing parts form the basis for installation of an electronic unit to the flow meter housing, and/or to provide attachment means for further items.

The flow meter according to the invention is especially suited for large flow meters, i.e. for flow meters with a measurement channel diameter such as 50 mm ∅ or larger.

Fig. 2 shows section cut A-A of Fig. 1. A measurement path between TGH1 and TGH2 is illustrated by a dashed line. A channel C1 arranged for fluid flow during operation of the ultrasonic flow meter is seen going through the axis of rotation of the flow meter housing.

When mounting the ultrasound transducers from the channel C1 and outwards against the ultrasound transducer installation position at the angled ribs A1, A2, it is clear that pressure from the fluid flow in the channel C1 will force the ultrasound transducers in an outwards direction. Thus, seals mounted between the angled ribs A1, A2 and the ultrasound transducers would make the installation self sealing due to the fluid flow pressure.

It is obvious to let the relative angle of the surface of the angled ribs A1, A2 containing the opening for the through-going holes TGH1, TGH2 be perpendicular to the measurement line ML1. However, this is no limitation of the invention, since all angles of the surface can be relevant depending on the geometry of the ultrasound transducer.

Fig. 3 illustrates an embodiment which also includes first and second housing parts H1, H2 being concentric elements, e.g. formed in a turning process. Contrary to the embodiment of Figs. 1 and 2, the first and second housing parts H1, H2 are simple concentric ring-shaped elements without any angled rib parts forming the basis for drilling of the through-going holes for mounting of ultrasound transducers TGH1, TGH2. The first and second housing parts H1, H2 are interconnected with two watertight passages W3, W4, i.e. using an assembly process as already mentioned above and with an intermediate channel forming element CFE2, preferably in the form of a piece of pipe, alternatively by a specially formed concentric element. In a similar manner, flange parts F1, F2 are interconnected with the respective first and second housing parts H1, H2 via channel forming elements CFE1, CFE3, also in the form of pieces of pipes or specially formed concentric elements. Watertight passages W1, W2, W5, W6 for interconnecting these channel forming elements CFE1, CFE3 with the flanges F1, F2 and the housing parts H1, H2 are preferably formed as already mentioned.

Compared to the embodiment of Figs. 1 and 2, the embodiment of Fig. 3 has simple shaped components but requires more interconnecting watertight passages W1-W6. However, due to the concentric shapes of these watertight passages W1-W6, they may be formed by means of a welding robot. It is to be understood that the channel forming elements CFE1, CFE2, CFE3 can have different length, thus allowing this embodiment to be easily fitted to various lengths at a late state in the manufacturing process, both with respect to total length of the flow meter housing, and with respect to a length of measuring path, i.e. a length determined by a length between the through-going holes TGH1, TGH2.

Fig. 4 illustrates section A-A of the embodiment of Fig. 3. As in Fig. 2, a measurement path is illustrated with a dashed line.

To sum up, the invention provides an ultrasound flow meter housing including a first housing part with a first channel for fluid flow, and a first through-going opening to the first channel. A second housing part has a second channel for fluid flow, and a second through-going opening to the second channel. The first and second through-going openings are arranged for mounting of respective first and second ultrasound transducers. A measurement channel includes at least parts of the first and second channels, and the first and second housing parts are interconnected by at least one watertight passage, e.g. such as at least one gastight passage. This watertight passage can be formed by welding, soldering or gluing. Especially, the first and second housing parts may be concentric monolithic metal parts formed by a turning process, and the at least one watertight passages are concentric welding seams. The first and second housing parts can be directly interconnected by a single watertight passage, or they may be interconnected via one or more intermediate channel forming elements using two or more watertight passages. Flange parts for forming inlet and outlet of the flow meter may be monolithically formed with the housing parts, or interconnected with the housing parts via a channel forming element using one or more watertight passages. Especially embodiments with concentric housing parts are suitable for low cost manufacturing, e.g. automatic welding robots may be used, and still the flow meter housings can be suited for high pressure applications.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. An ultrasound flow meter for ultrasonic measurement of fluid flow, the ultrasound flow meter including
- a first housing part (H1) with a first channel arranged for fluid flow, the first housing part (H1) including a first through-going opening (TGH1, TGH2) to the first channel, the first through-going opening (TGH1, TGH2) being arranged for mounting of a first ultrasound transducer, and
- a second housing part (H2) with a second channel arranged for fluid flow, the second housing part including a second through-going opening to the second channel, the second through-going opening being arranged for mounting of a second ultrasound transducer,
wherein a measurement channel includes at least a part of the first channel and a part of the second channel, and wherein the first and second housing parts (H1, H2) are interconnected by at least one watertight passage (W3, W4), such as at least one gastight passage.

2. Ultrasound flow meter according to claim 1, wherein end parts of the first and second housing parts (H1, H2) are directly connected by means of a single watertight passage.

3. Ultrasound flow meter according to claim 1 or 2, wherein end parts of the first and second housing parts (H1, H2) are interconnected via a channel forming element (CFE2), such as a piece of pipe, with a first end connected to an end part of the first housing part (H1) and a second end connected to an end part of the second housing part (H2) by means of respective first and second watertight passages (W3, W4).

4. Ultrasound flow meter according to any of the preceding claims, wherein the first and second housing parts (H1, H2) include respective end parts with a substantially circular shape arranged for performing a watertight passage (W3, W4) to another element.

5. Ultrasound flow meter according to any of the preceding claims, wherein the first and second housing parts (H1, H2) are formed by respective monolithic metal parts.

6. Ultrasound flow meter according to any of the preceding claims, including first and second flanges (F1, F2) arranged for connection to a channel for fluid flow.

7. Ultrasound flow meter according to claim 6, wherein the first housing part (H1) is connected to the first flange (F1) by means of one or more watertight passages (W1, W2), such as the first housing part (H1) being connected to the first flange (F1) by one single watertight passage (W1), such as the first housing part (H1) being interconnected to the first flange (F1) via a channel forming element (CFE1), such as a piece of pipe, with a first end connected to an end part of the first housing part (H1) and a second end connected to an end part of the first flange (F1) by means of a watertight passage (W1).

8. Ultrasound flow meter according to any of the preceding claims, wherein the first housing part (H1) includes a plurality of through-going openings (TGH1, TGH2) to the first channel, said plurality of through-going openings (TGH1, TGH2) being arranged for mounting of respective ultrasound transducers, and wherein the second housing part (H2) includes a corresponding plurality of through-going openings to the second channel, said plurality of through-going openings being arranged for mounting of respective ultrasound transducers, and wherein the plurality of through-going openings in the first and second housing parts (H1, H2) are directed so as to form a plurality of measurement paths between respective ultrasound transducers mounted in through-going openings (TGH1, TGH2) in the first housing part (H1) and ultrasound transducers mounted in through-going openings in the second housing part (H2).

9. Ultrasound flow meter according to claim 8, including a measurement unit arranged for electrical connection to ultrasound transducers mounted in the plurality of through-going openings in the first and second housing parts (H1, H2), the measurement unit being arranged to perform ultrasonic measurements utilizing the plurality of measurement paths and to generate first data representing a first flow rate based thereon.

10. Ultrasound flow meter according to claim 9, wherein the measurement unit is arranged to generate the first data representing the first flow rate based on a first set of measurement paths, and to generate second data representing a second flow rate based on a second set of measurement paths, such as the first and second sets of measurement paths being disjoint sets.

11. Ultrasound flow meter according to any of the preceding claims, wherein the first and second housing parts (H1, H2) have shapes which are substantially rotation symmetrical around an axis through a central part of the flow meter.

12. Ultrasound flow meter according to any of the preceding claims, wherein the at least one watertight passage (W1, W2, W3, W4, W5, W6) is one of: a soldered passage, a welded passage, and a glued passage.

13. Ultrasound flow meter according to any of the preceding claims, wherein the first and second housing parts are formed by a material being one of: a metal, a ceramics, a polymeric material, and a composite material.

14. A consumption meter including an ultrasound flow meter according to any of claims 1-13, such as a consumption meter being one of: a heating meter, a cooling meter, a water meter, and a gas meter.

15. A method of manufacturing an ultrasound flow meter including
- forming a first housing part including a first channel and a first through-going opening to the first channel, the first through-going opening being arranged for mounting of a first ultrasound transducer,
- forming a second housing part including a second channel and a second through-going opening to the second channel, and
- performing an interconnecting process, such as soldering or welding or gluing, so as to form at least one watertight passage for interconnecting the first and second housing parts, thereby forming a measurement channel including at least parts of the first and second channels.

16. Method of manufacturing an ultrasound flow meter according to claim 15,
wherein the forming of the first and second housing parts includes performing a process on a metal body so as to form first and second substantially concentric housing parts.
